# EUROPEAN PATENT APPLICATION

(11) **EP 1 980 810 A1**
(43) Date of publication of application: **15.10.2008**
(21) Application number: 06847419.6
(22) Date of filing: 26.12.2006
(51) Int. Cl.: F25J 3/02, F25J 3/08

(54) **METHOD FOR CLEANING AND SEPARATING A KRYPTON-XENON MIXTURE BY RECTIFICATION AND A PLANT FOR CARRYING OUT SAID METHOD**

(30) Priority: 29.12.2005 RU 2005141204
(71) Applicant: Savinov, Mikhail Yurievich, Moscow 121433 (RU)
(72) Inventor: Savinov, Mikhail Yurievich, Moscow 121433 (RU)
(74) Representative: Andrae, Steffen
(86) International application number: PCT/RU2006/000699
(87) International publication number: WO 2007/078212

(57) **Abstract**

The invention relates to cryogenic engineering, in particular to purifying and separating a krypton-xenon mixture producible by means of air-separating plants and can be used in the chemical and oil-and-gas industries. The inventive method consists in purifying and separating the mixture by rectification, in cooling a compressed coolant in stills of rectification towers, wherein said coolant is removed and returned to a cooling cycle, in additionally removing radionuclides from krypton and xenon fractions and from krypton and xenon production flows by means of filtration and/or adsorption and/or rectification and/or absorption and/or chemical and/or physico-chemical methods in devices used for additionally removing radionuclides and in recertifying flows and gas bottles with respect to their radionuclides content and/or activity prior to and after the filling thereof as separation products. A plant for carrying out said method is also disclosed. The invention makes it possible to additionally remove radionuclides from separation products in such a way that said products can be used, for example, for medical purposes, and to increase the cost efficiency of the purification and separation process.

## Description

The invention relates to the filed of cryogenic engineering. More specifically, the invention pertains to refining and separating a krypton-xenon mixture obtained at air-fractionating installations, and it can be used in te chemical and oil-and-gas producing industries.

Known in the art is a method for refining and separating a krypton-xenon mixture by rectification including delivering the mixture in a preliminary separation column to form a krypton fraction and a xenon fraction, purifying each fraction by rectification to remove volatile and high-boiling components with the formation of a reflux in evaporating condensers due to the boiling of liquid coolant coming from a reservoir and from a cooling cycle, reception and pumping a production krypton and xenon in the cylinders (patent RU 2265778 C1, 2005).

The known method does not allow to clean production krypton and xenon from radionuclides, for example, from products of the radioactive decay of radon, containing in an initial mixture, and also this method is rather expensive.

An object of the invention is to obtain a production krypton and xenon, cleared from radionuclides, for their use, for example, in the medicine and in order to enhance the efficiency.

A method for purifying and separating a krypton-xenon mixture by rectification comprises suppling of a mixture in a column for a preliminary separation into krypton and xenon fractions, purifying each fraction by rectification to remove volatile and high-boiling components with the formation of a reflux in the evaporating condensers due to the boiling of liquid refrigerant coming from a reservoir and from a refrigerating cycle, obtaining and pumping production krypton and xenon in gas cylinders, the method being **characterized in that** before its supply to a column of preliminary separation into krypton and xenon fractions the mixture is additionally cleared from radionuclides at an additional device for clearing the mixture from radionuclides. Thereafter the streams of the krypton and xenon fractions are additionally cleared from radionuclides accordingly at an additional device for clearing the krypton fraction from radionuclides, and at an additional device for clearing the xenon fraction from radionuclides, with a control of their content and/or activity of radionuclides. The xenon fraction is removed from a the still bottoms mainly in vapor form, the production streams of krypton and xenon being additionally cleared from radionuclides before their delivery to the filling stations accordingly at a device for the finishing clearing of production krypton and at a device for the finishing clearing of production xenon. During pumping of the production streams into gas cylinders the streams are additionally tested on their radionuclides content and/or activity. In the evaporators of the still boilers of the refractionating columns compressed refrigerant is cooled off. The refrigerant is removed from a refrigerating cycle with the following return of refrigerant into the refrigerating cycle. The clearing of .the krypton fraction in the additional device for clearing the krypton fraction from radionuclides and the clearing of the xenon fraction in the additional device for the clearing of the xenon fraction from radionuclides are carried out by a rectification method. The clearing of the mixture at the additional device for clearing the mixture from radionuclides, the clearing of production krypton flow at the finishing device of clearing the production krypton and the clearing of production xenon at the finishing device for clearing the production xenon are carried out by filtration and/or absorption and/or adsorption and/or chemical and/or physicochemical methods. The above mentioned devices are thermoregulated, the cylinders before pumping of production krypton and xenon are additionally cleaned and are recertified with respect to their radionuclides content and/or activity.

Known is a device for purifying and separating a krypton-xenon mixture by rectification, comprising a mixture feed line, a column of the preliminary separation into krypton and xenon fractions, and connected to the last line of a krypton fraction a column of production krypton and a line of a xenon fraction a column of production xenon, a refrigerating cycle connected with evaporating condensers of columns by means of pipelines and valves, the lines of production flows of krypton and xenon with filling stages placed on them (patent RU 2265778, 2005).

The known installation does not allow to clear production krypton and xenon from radionuclides, for example, from products of the radioactive decay of radon, contained in an initial mixture, and also is of poor efficiency.

The purpose of the invention is the production of production krypton and xenon, purified from radionuclides, for their use, for example, in the medicine. Another purpose of the invention is to increase the efficiency.

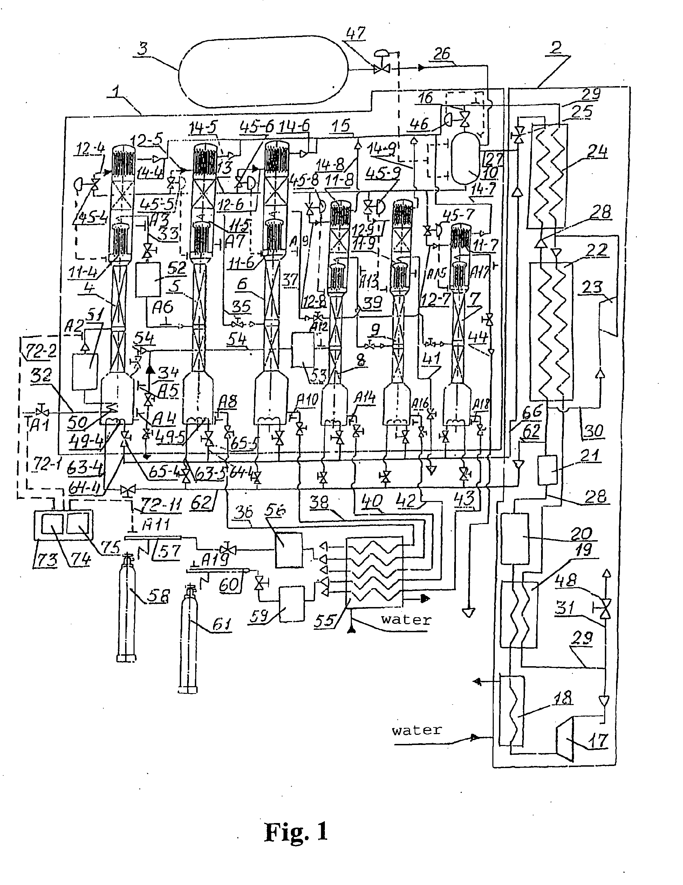

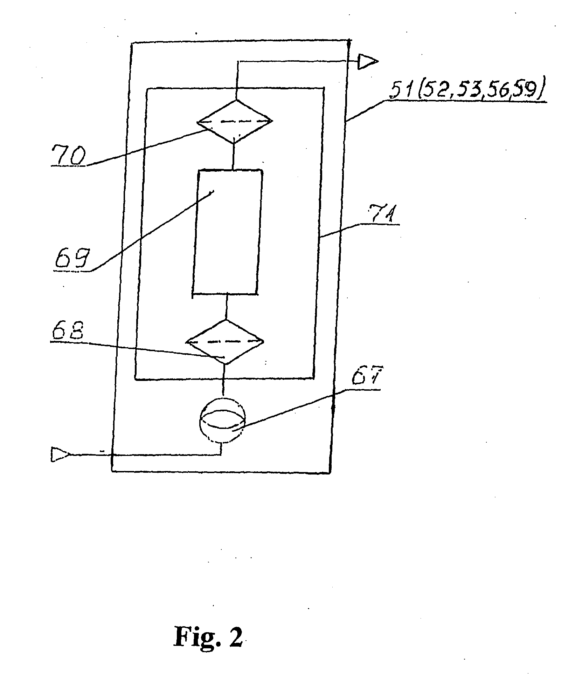

The object is achieved by a device (installation) for purifying and separating a krypton-xenon mixture by rectification including a line of submission of the mixture, a column for the preliminary separation into krypton and xenon fractions connected to the last line of a krypton fraction a column of production krypton and a line of a xenon fraction a column of production xenon, connected with evaporating condensers of columns by means of pipelines and gates a cold cycle, the lines of production flows of krypton and xenon with filling stages placed on them, a distinctive feature is that on the feed line of a mixture the additional device of the cleaning of a mixture with the system of thermoregulating is established, on the line of krypton fraction before the column of production krypton the additional device of cleaning a krypton fraction from radionuclides and/or the additional rectification column of cleaning a krypton fraction from radionuclides is established, on the line of xenon fraction before the column of production xenon the additional device of cleaning a xenon fraction from radionuclides and/or the additional rectification column of cleaning a xenon fraction from radionuclides is established, on the lines of production streams of krypton and xenon before accumulative ramps accordingly the device of the finishing clearing of production krypton and the device of the finishing clearing of production xenon are established, the cube of the column of preliminary separation on krypton and xenon fractions is supplied by an additional line of the selection of xenon fraction in the vapor form, a column, the lines of the delivery of products and accumulative ramps are in addition supplied by devices of the control and recertification with respect to the radionuclides content and/or activity, thus in the cubes of columns additional evaporators are placed, each of which is connected by an input and an output to a refrigerating cycle, and additional devices of the cleaning of flow from radionuclides consist of successively placed a stimulus of the charge, an entrance filtering element, an active cleaning element and a target filtering element. The invention is explained by drawings. On figure 1 the installation for the purification and separation of a krypton-xenon mixture, and on the figure 2 an additional device for the purification of process streams from radionuclides are schematically shown.

The installation (figure 1) contains the block of low-temperature rectification 1, a cooling cycle 2, the reservoir of liquid coolant 3, connected by pipelines with armatures.

The block of low-temperature rectification includes the column 4 of preliminary separation, an additional rectification column 5 for the cleaning of krypton fractions from radionuclides, a production krypton column 6, a column 7 of the separation of krypton from low-boiling impurities, an additional rectification column 8 of the cleaning of xenon fractions from radionuclides, a production xenon column 9, a separator 10, connected by pipelines (lines) with adjusting armature. Each column below has an evaporator ("cube") supplied by a coil of the evaporator 49-4 ÷ 49-9, and at the head - the evaporating condenser. The cube of the column 4 of preliminary separation on krypton and xenon fractions further contains the coil of the evaporator warmed by a multicomponent mixture coming for separation.

All the evaporating condensers 11-4 ÷ 11-9 have branch pipes connected by lines 12-4 ÷ 12-9, supplied by adjusting valves 45-4 ÷ 45-9, with a liquid coolant collector 13, which in turn, is connected with a branch pipe in the bottom part of the branch 10 and the branch pipes connected by the lines 14-4 ÷ 14-9 of the tapping of the coolant flows with a collector 15. In the top part the separator 10 has a branch pipe of the output of coolant flows, connected by a line 16 with the adjusting valve 46 with a collector 15, a branch pipe of the input of a liquid coolant, connected by a line 16 with the adjusting valve 47 with the reservoir 3 of a liquid coolant, and a branch pipe of the input the vapor-and-liquid flow of a coolant, connected by a line 27 with a target branch pipe of a cooling cycle 2.

The column 4 of preliminary separation on krypton and xenon fractions in its middle part has a branch pipe, connected by the pipeline through the evaporator 50 with a line 32 of the krypton-xenon mixture flow. On the line 32 of the flow of a krypton-xenon mixture, for example, on a course of a mixture after the evaporator 50 the additional device 51 of the cleaning of a mixture from radionuclides is established. In the top part the column 4 has a branch pipe connected by a line 33 of the krypton fraction flow with a branch pipe in its middle part of an additional rectification column 5 of the cleaning of a krypton fraction from radionuclides. On the line 33 of the krypton fraction flow the additional device 52 of the cleaning of a krypton fraction from radionuclides is established. The cube of a column 4 in the top part has a branch pipe connected by a line 54 of the krypton fraction flow, allocated in a vaporous kind, with a branch pipe in s middle part of an additional rectification column 8 of the clearing of a xenon fraction from radionuclides, and in the bottom part - a branch pipe connected by a line 34 of the flow of a xenon fraction, allocated in a liquid kind, with a line 54. On the line 54 the additional device 53 of the cleaning of a xenon fraction from radionuclides is established.

The additional rectification column 5 of the cleaning of a krypton fraction from radionuclides in the top part has a branch pipe connected by a line 35 of a cleaned krypton fraction flow with a branch pipe in its middle part of a production krypton column 6, and in the bottom part, in a cube - a branch pipe - connected by a line 36 of the intermediate impurity flow through the evaporator 55 with an output from the device.

The production krypton column 6 has in its top part a branch pipe connected by a line 37 of a blowing gases stream of a production krypton column with a branch pipe in its middle part of a column 7 of the separation of krypton from low-boiling impurities, and in the bottom part of a cube - a branch pipe connected by a line 38 of the production krypton flow through the evaporator 55 and the device 56 of production krypton finishing clearing with a filling krypton ramp 57 and cylinders 58, in addition cleaned from radionuclides and recertified with respect to the radionuclides content and/or activity.

The column 7 of the separation of krypton from low-boiling impurities in the top part has a branch pipe connected by a line 44 of the low-boiling impurities flow with an output from the installation, and in the bottom part, in a cube - a branch pipe - connected by a line 43 of the stream of dedicated krypton through the evaporator 55 with an output from the device.

The additional rectification column 8 of the cleaning of a xenon fraction from radionuclides in the top part has a branch pipe connected by a line 39 of a cleaned xenon fraction flow with a branch pipe in its middle part of a production xenon column 9, and in the bottom part, in a cube - a branch pipe - connected by a line 40 of the intermediate impurity flow through the evaporator 55 with an output from the device.

The production xenon column 9 has in its top part a branch pipe connected by a line 41 of a blowing gases stream of a production xenon column with an output from the installation, and in the bottom part of a cube - a branch pipe connected by a line 42 of the production xenon flow through the evaporator 55 and the device 56 of production xenon finishing clearing with a xenon krypton ramp 60 and cylinders 61, in addition cleared from radionuclides and certificated under the maintenance and/or activity in them radionuclides.

The refrigerating cycle 2 contains a compressor 17, a trailer refrigerator 18 cooled by water, a preliminary heat exchanger 19, an adsorbent unit 20 of complex cleaning, a filter 21, a basic heat exchanger 22, a gas-expansion machine 23, an additional heat exchanger 24, a throttle device 25, connected by a line 28 of the direct flow, a soaking up line (a line of a return flow) 29 and a line 30 of an expander flow. The line of a direct flow 28 after the filter 21 is connected by a collector 62 and lines 63-4 ÷ 63-9 supplied be stop valves, with an input of the coils 46-4 ÷ 46-9 of evaporators, on an output of the coils of evaporators the lines 64-4 ÷ 64-9 supplied by throttle devices and a collector 66, connected to a target branch pipe of a cooling cycle 2 and further a line27 with a separator 10. On the figure 1 only the coils of evaporators 49-4 ÷ 49-5, the lines 63-4, 63-5, 64-4, 64-5 and throttle devices 65-4, 65-5 relating to rectification columns 4 and 5 are conditionally designated. For other columns - it is similar.

The rectification columns, the feed lines of the rectification columns, the lines of delivery of the products of separation and the filling ramps are supplied by unions A1 ÷ A19 and the 72-1 ÷ 72-19 lines of environment sampling to the devices 73 of the control and recertification of radionuclides with respect to its content and/or activity which include devices 74 of measurement of microimpurities and/or devices 75 of measurement of the activity radionuclides.

The additional device 51 of cleaning of the mixture from radionuclides, the additional device 52 of cleaning a krypton fraction from radionuclides and the additional device 53 of cleaning a xenon fraction from radionuclides, the device 56 of finishing cleaning of production krypton and the device 59 of finishing cleaning of production xenon contain (figure 2) a stimulus of the charge 67, an entrance filtering element 68, an active cleaning element 69 and a target filtering element 70 and a thermoregulating system 71.

The declared way of the separation of a krypton-xenon mixture is carried out as follows.

The krypton-xenon mixture received from air-separating installations, cleaned of the carbohydrates, containing in its structure target components krypton Kr and xenon Xe and impurities having greater volatility in relation to krypton (for example, neon Ne, nitrogen N₂, oxygen O₂), greater volatility in relation to xenon, but smaller in relation to krypton (for example, freon C₂F₆), smaller volatility in relation to xenon (for example, carbon dioxide CO₂, ethane C₂H₆), and also radionuclides (for example, radon Rn and its affiliated products of disintegration) is supplied through the line32 of the stream of a krypton-xenon mix through the evaporator 50 to the additional device 51 of cleaning of a mixture from radionuclides and further in its middle part of a column 4 of preliminary division into krypton and xenon fractions. The mixture, passing in a thermoregulating device 51 through an entrance filtering element 68, an active cleaning element 69 and a target filtering element 70, is cleaned from radionuclides, reached at the moment of processing a stable condition.

As a result of the process of rectification xenon the fraction containing all xenon, basically less volatile impurities in relation to xenon and heavy radionuclides, and also small, specially supported quantity of krypton (2-5 %) in the cube gathers. In the top part of the column a krypton fraction containing krypton, basically volatile in relation to krypton impurity and radionuclides which is directed on a line 33 of the flow of krypton fractions through the additional device 52 of cleaning a krypton fraction from radionuclides in an additional rectification column 5 of cleaning a krypton fraction from radionuclides gathers. In the column 5 as a result of the process rectification in the cube high-boiling radionuclides in relation to krypton together with high boiling and an insignificant part of krypton are concentrated, from where on a line 36 through the evaporator 55 they are deduced from the device. The cleaned krypton fraction flow, already not containing high-boiling in relation to krypton substances is deduced from the head of a column 5, and is directed to a production krypton column 6. As a result of the process of rectification production krypton is gathered in the cube of the column 6 which is directed on a line 33 of the production krypton flow through the evaporator 55, the device 56 of production krypton finishing cleaning into an accumulative krypton ramp 57 and into the cylinders 58. From the head of a column 6 on a line 37 a flow of gas which contains.in its structure krypton and all volatile in relation to krypton impurities, is deduced, and is directed to a column 7 of krypton separation from low-boiling impurities.

As a result of the process of rectification in the cube of the column 7 krypton is gathered which as accumulated is deduced on a line 43 through the evaporator 55, and from the head of a column on a line 44 a stream of low-boiling impurities is deduced.

From the cube of the column 4 of preliminary division on xenon and krypton to fractions the stream of xenon fraction mainly in the form of steam on a line 54 through the additional device 53 of the clearing of a xenon fraction from radionuclides is directed into an additional rectification column 8 of the clearing of a xenon fraction from radionuclides. In the column 8 as a result of the process rectification in the cube high boiling radionuclides in relation to krypton together with high boiling impurities and an insignificant part of xenon are concentrated, from where on a line 40 through the evaporator 55 they are deduced from the device. From the head of a column 8 on a line 39 a stream of a cleared krypton fraction which contains only krypton and xenon is directed into a production krypton column 9. As a result of the process of rectification in the cube of the column 9 production xenon is gathered on a line 42 through the evaporator 55, the device 59 of the finishing cleaning of production xenon is directed into an accumulative xenon ramp 60 and into the cylinders 61, and from the head of a column 9 on a line 44 the stream of gaseous krypton deduced and directed, for example, into gasholder.

The coolant, for example, liquid nitrogen, from the reservoir 3 of liquid coolant on a line 26 through an adjusting valve 47 is directed to a separator 10, supporting in a separator of 10 a set liquids level, and further to the collector 13 of liquid coolant. From the collector 13 liquid coolant on lines 12-4÷12-9, each of which is supplied accordingly by adjusting valves 45-4÷45-9, is supplied to the boiling surface of evaporating condensers 11-4÷11-9. The steams which have formed at the boiling of coolant on the lines of tapping of coolant flows are directed 12-4÷12-9 to a collector 15 and further on the line of induction 29 as a return stream through an additional heat exchanger 24, the basic heat exchanger 22, the preliminary heat exchanger 19 are supplied to the compressor 17. The gas compressed in the compressor 17 is directed to a line 28 of the direct flow, being cooled by water in a trailer refrigerator 18, as a return flow in preliminary heat exchanger 19, being cleaned from possible impurities in the adsorptive unit of complex cleaning 20 and the filter 21. After the filter 21 a part of the compressed gas on a line 30 of a gas-expansion machine flow is directed to the gas-expansion machine 23 where it is expanded with fulfillment of external work, and then is supplied to a line of the return flow 29 before the core heat exchanger 22. The other part of the compressed flow after the filter 21, through the collector 62 and to the lines 63-4÷63-9 supplied by stop valves, is supplied to coils of evaporators 49-4 ÷ 49-9, on the output from which on lines 64-4÷64-9 the cooled flow is expanded in throttle devices 65-4÷65-9, is collected by a collector 66 and is connected after the throttle device 25 with the remained direct flow preliminary cooled in the basic 22 and the additional 24 heat exchangers and in the expanded throttle device 25. The formed two phase flow through the line 27 is directed to a separator 10 where coolant flows after the branch of the liquid through the line 16 through an adjusting valve 46 are directed to a collector 15, and the liquated coolant together with an additional charging of liquid coolant from the reservoir 3 of liquid coolant is supplied to the evaporating condensers. The valve 46 provides necessary for work of the adjusting valves 45-4-45-9 pressure difference between the pressure of coolant flows in the separator 10 and the collector 15.

The adjusting valve 48 established on the line 31, supports on the suction of the compressor 17 demanded pressures, deducing from the refrigerating cycle a part of warm gaseous coolant.

At the realization of the filtration method of clearing from radionuclides of the flow of krypton mixes and/or krypton fractions and/or xenon fractions and/or production and/or a production flow of xenon mean the execution of an entrance filtering element 68 (figure.2) and a target filtering element 70 from the materials having equivalent diameter of filtration less than the minimal size aerosols, formed by corresponding filtered radionuclides.

At the realization of a adsorptive method of clearing from radionuclides of the stream of krypton mixes and/or krypton fractions and/or xenon fractions and/or production and/or a production stream of xenon mean the execution of an active cleaning element 69 (figure 2) in the form of an adsorptive cartridge filled by sorbent, and the equivalent size of the pores of the sorbing substances makes not less than the size of molecules of a corresponding radionuclide, and the temperature of thermoregulating is supported not less than temperature of condensation of a corresponding stream.

At the realization of a adsorptive method of clearing from radionuclides of the stream of krypton mixes and/or krypton fractions and/or xenon fractions and/or production and/or a production stream of xenon mean the execution of an active cleaning element 69 (figure 2) in the form of an adsorptive cartridge filled by absorbent, and the temperature of thermoregulating is supported not less than the temperature of crystallization of absorbent.

At the realization of a chemical method of cleaning from radionuclides of the stream of krypton mixes and/or krypton fractions and/or xenon fractions and/or production and/or a production stream of xenon mean the execution of an active cleaning element 69 in the form of a chemical reactor filled by the catalyst which carries out chemical linkage of a corresponding radionuclide with an oxidizer entering into the structure of the catalyst. The temperature of thermoregulating makes not below the temperature of the ignition of an oxidation reaction and not above the temperature of the catalyst destruction or the temperature of loss of the dynamic durability of constructional materials from which the cleaning element is executed. At the realization of a physical and chemical method of cleaning from radionuclides of the stream of krypton mixes and/or krypton fractions and/or xenon fractions and/or production and/or a production stream of xenon mean the execution of an active cleaning element 69 in the form of the cartridge filled by an active branched out superficially active surface, for example by porous titan, by porous copper, etc., effecting sedimentation on the branched out surface of molecules and/or aerosols of corresponding radionuclides under the action of electromagnetic forces of interaction.

The above-listed methods of cleaning from radionuclides can be used separately or in a combination with each other. The selection of xenon fractions in the form of the steam allows to reduce in it concentration of high boiling relation to xenon impurities, that as a result allows to receive greater cleanliness of production xenon. The cooling of compressed coolant in evaporators of a cube of rectification columns allows to increase by 15-20 % an output from a cooling cycle of liquid coolant and, accordingly, to raise efficiency of the separation processes.

The use of the declared invention will allow to purify production krypton and xenon from radionuclides and to carry out cleaning and separation of a krypton-xenon mixture less expensive.

## Claims

1. A method for purifying and separating a krypton-xenon mixture by rectification, comprising supplying the mixture to a column for a preliminary separation into krypton and xenon fractions, purifying each fraction by rectification from volatile components and components of low volatility with the formation of a reflux in condensers-evaporators by means of a boiling liquid refrigerant supplied from a reservoir and from a refrigerating cycle, obtaining and pumping product krypton and product xenon into gas bottles, **characterized in that** the mixture, before it is supplied to the column for the preliminary separation into krypton and xenon fractions, is additionally purified from radionuclides in an additional device for purifying the mixture from radionuclides, and that downstream in the process the streams of the krypton and xenon fractions are additionally purified from radionuclides by means of an additional device for purifying the krypton fraction from radionuclides and by means of an additional device for purifying the xenon fraction from radionuclides, with control of the radionuclides contents and/or activities therein, withdrawing the xenon fraction from the still mainly in vapor form, the product streams of krypton and xenon being additionally purified from radionuclides before they are supplied to the filling stations in a device for the final purification of the product krypton and in a device for the final purification of the product xenon, the product streams being certified with respect to their contents and/or activity of radionuclides in the process of pumping them into gas bottles, whereas in the evaporators of the stills of the rectification columns a pressurized coolant is cooled, said coolant being withdrawn from the cooling cycle, and subsequently returned into the cooling cycle.

2. The method of claim 1, wherein the purification of the krypton fractions in the additional device for the purification of krypton fractions from radionuclides, and the purification of the xenon fractions in the additional device for the purification of the xenon fractions from radionuclides, is carried out by a rectification method.

3. The method of claim 1, wherein the purification of the mixture in the additional device for the purification of the mixture from radionuclides, the purification of the product stream of krypton in the device for the final purification of the product krypton, and the purification of the product stream of xenon in the device for the final purification of the product xenon is carried out by filtration and/or adsorption and/or absorption and/or chemical and/or physico-chemical methods, and wherein said devices are thermoregulated.

4. The method of claims 2 or 3, wherein the gas bottles, before introducing the product krypton and product xenon respectively are additionally cleaned from radionuclides and certified with respect to their radionuclides contents and/or activity.

5. A device for purifying and separating a krypton-xenon mixture by rectification, comprising a line for supplying the mixture, connected with a column for its preliminary separation into krypton and xenon fractions, a connected with the line for the krypton fraction column for the product krypton, and a connected with the line for the xenon fraction column for the product xenon, and a coolant cycle being connected with the evaporators/condensers of the columns by means of pipelines and valves, the lines for the production streams of krypton and xenon being connected with a filling station placed on them, **characterized in that** an additional device for purifying the mixture from radionuclides comprising a thermoregulating system is provided in the line of supplying the mixture, an additional device for purifying the krypton fraction from radionuclides is provided in the line for the krypton fraction before the production column for krypton and/or an additional rectification column for the purification of the krypton fractions from radionuclides, and/or on an additional device for purifying the xenon fraction from radionuclides is provided in the line for the xenon fraction before the production column for xenon and/or an additional rectification column for the purification of xenon fractions from radionuclides, in the lines for the product streams of krypton and xenon before their respective filling stations there is provided a device for the final purification of the product krypton, and a device for the final purification of the product xenon, the still of the column for the preliminary separation in krypton and xenon fractions being provided with an additional line for the withdrawal of a xenon fraction in the vapor form, the columns, the output lines for the separation products and the filling stations further being supplied with devices for the control and certification of the contents and/or activity of radionuclides, and in the stills of the columns additional evaporators are placed, each of which is connected with their entrance and exit to a cooling cycle.

6. The device of claim 5, wherein the additional devices for purifying the streams from radionuclides consist of successively arranged flow enhancers, an input filter element, an active cleaning element and an output filter element.
